# FASCICULE DE BREVET EUROPEEN

(11) **EP 2 469 936 B1**
(45) Date de publication et mention de la délivrance du brevet: **07.02.2018**
(21) Numéro de dépôt: 11193448.5
(22) Date de dépôt: 14.12.2011
(51) Int. Cl.: H04W 48/18, H04W 8/18

(54) **Procédé de sélection d'un réseau d'accès sans fil**
Auswahlverfahren eines drahtlosen Zugangsnetzes
Method for selecting a wireless access network

(30) Priorité: 21.12.2010 FR 1060879
(43) Date de publication de la demande: 27.06.2012
(73) Titulaire: Orange, 75015 Paris (FR)
(72) Inventeur: Thily, Erick, 22730 TREGASTEL (FR); Bonnamy, Jean-Michel, 22560 PLEUMEUR BODOU (FR)

(56) Documents cités:
- WO-A1-2008/131591
- WO-A1-2008/151830
- US-A1- 2009 022 076

## Description

L'invention se situe dans le domaine des télécommunications, et plus particulièrement dans le domaine des réseaux locaux tels que les réseaux de type LAN (*Local Access Network*)*.*

Afin d'offrir un accès au réseau Internet le plus large possible, il est connu d'utiliser les passerelles domestiques ou les passerelles d'entreprise comme points d'accès à un réseau d'accès sans fil tel que par exemple un réseau WiFi.

Pour cela, une passerelle domestique gère un premier réseau d'accès sans fil à accès contrôlé par le propriétaire de la passerelle et réservé, par exemple, à l'usage du propriétaire de la passerelle, et un deuxième réseau d'accès sans fil prévu pour un usage communautaire dont l'accès peut être limité ou pas. Chacun de ces réseaux d'accès sans fil est associé à un identifiant de réseau SSID (*Service Set Identifier*) tel que défini dans le document normatif IEEE 802.11 publié par l'Institut des ingénieurs électriciens et électroniciens ou IEEE (*Institute of Electrical and Electronics Engineers*)*.* Pour un opérateur en télécommunications donné, tous les réseaux d'accès sans fil prévu pour un usage public et/ou communautaire ont le même identifiant de réseau SSID.

Lorsqu'un terminal, tel que par exemple un « smartphone », s'est dernièrement connecté au réseau d'accès sans fil prévu pour un usage public, il peut s'attacher automatiquement à ce réseau d'accès sans fil prévu pour un usage public lorsqu'il se trouve de nouveau dans la zone de couverture du réseau local desservi par la passerelle domestique.

Une fois le terminal attaché à ce réseau d'accès sans fil, il bénéficie d'un niveau de qualité de service QoS moindre. En effet, s'agissant d'un réseau d'accès sans fil prévu pour un usage communautaire utilisant les ressources du réseau local du propriétaire de la passerelle domestique, ce réseau d'accès prévu pour un usage communautaire bénéficie d'une bande passante allouée minimale, et d'un niveau de priorité accordé aux données émises par le terminal moindre.

Ainsi, même dans la zone de couverture du réseau local du propriétaire de la passerelle domestique, le terminal ne bénéficie pas d'un niveau de qualité de service optimal.

La demande de brevet WO 2008/151830 enseigne une méthode de sélection d'un réseau d'accès par un terminal en fonction d'informations dont il dispose. Lorsqu'il est préférable pour l'utilisateur que la sélection effectuée faite par le terminal soit corrigée, l'utilisateur doit le faire manuellement.

Un des buts de l'invention est de remédier à des inconvénients de l'état de l'art.

A cette fin, l'invention propose un procédé de sélection d'un réseau d'accès sans fil par l'intermédiaire duquel un terminal accède à un troisième réseau de communication, le procédé de sélection comprenant les étapes suivantes mises en oeuvre par un équipement de communication offrant un accès au troisième réseau de communication par l'intermédiaire d'au moins un premier et un deuxième réseau d'accès sans fil :
- réception d'une demande d'attachement du terminal au premier réseau d'accès sans fil
- comparaison d'un identifiant du terminal avec une pluralité d'identifiants de terminaux autorisés à se connecter au deuxième réseau d'accès sans fil,
- émission d'un message de refus d'attachement du terminal au premier réseau d'accès sans fil lorsque le terminal est autorisé à s'attacher au deuxième réseau d'accès sans fil Une telle solution permet d'utiliser un identifiant unique d'un terminal afin de sélectionner un réseau d'accès sans fil auquel le terminal est destiné à s'attacher.

Ainsi, il est possible pour un terminal s'étant déjà attaché une première fois à un réseau d'accès sans fil dit privé, c'est-à-dire un réseau d'accès sans fil à accès contrôlé, de s'attacher de nouveau à ce réseau d'accès sans fil privé lorsque celui a le choix de s'attacher à ce réseau d'accès sans fil privé ou à un autre réseau d'accès sans fil dit public, c'est-à-dire un réseau d'accès sans fil à accès non contrôlé. Le réseau d'accès sans fil privé et le réseau d'accès sans fil public sont, par exemple, des réseaux locaux LAN (Local Area Network), gérés par l'équipement de communication et conformes à la technologie Wifi par exemple. Le troisième réseau est par exemple un réseau de type WAN.

En effet, si l'identifiant unique du terminal est mémorisé dans l'équipement de communication réalisant l'interface entre le premier et le deuxième réseau d'accès sans fil et le troisième réseau, c'est que le terminal s'est déjà attaché une première fois au réseau d'accès sans fil privé. Ainsi, si le terminal entame une procédure d'attachement au réseau d'accès sans fil public, celle-ci se termine par un refus d'attachement, le terminal étant autorisé à s'attacher au réseau d'accès sans fil privé. Cela peut entrainer l'émission d'une demande d'attachement au réseau d'accès sans fil privé.

Le réseau d'accès sans fil privé étant un réseau d'accès sans fil à accès contrôlé, il offre un niveau de qualité de service QoS supérieure notamment en termes de bande passante allouée, de priorité accordée aux données émises par le terminal à destination du troisième réseau, etc., au niveau de qualité de service offert par le réseau d'accès sans fil public.

Ainsi, même si le dernier réseau d'accès sans fil auquel le terminal s'est connecté est un réseau d'accès sans fil public géré par un autre équipement de communication, le terminal ne peut pas se connecter au réseau d'accès sans fil public géré par l'équipement de communication. Le terminal bénéficie alors systématiquement du meilleur niveau de qualité de service QoS dès lors qu'il se trouve dans la zone de couverture du réseau d'accès sans fil privé.

De plus, une telle solution ne met pas en oeuvre un contrôle d'accès classique à un réseau d'accès sans fil. En effet, dans le procédé de sélection décrit précédemment, le contrôle d'accès au réseau sans fil prévu pour un usage communautaire se fait en fonction d'une autorisation d'un terminal à s'attacher ou pas à un réseau d'accès sans fil à accès contrôlé. Si un terminal est autorisé à s'attacher à un réseau d'accès sans fil à accès contrôlé, alors il n'est pas autorisé à s'attacher à un réseau d'accès sans fil prévu pour un usage public.

Selon une particularité du procédé de sélection d'un réseau d'accès sans fil, celui-ci comprend une étape d'émission d'un message d'acquittement d'attachement du terminal au premier réseau d'accès sans fil lorsque le terminal est autorisé à s'attacher au premier réseau d'accès sans fil.

Selon une particularité du procédé de sélection d'un réseau d'accès sans fil, celui-ci comprend une étape de réception d'une demande d'attachement du terminal au deuxième réseau d'accès sans fil.

Ainsi le terminal s'attache de manière automatique, c'est-à-dire sans action de la part de l'utilisateur du terminal, au réseau d'accès sans fil privé.

Selon une particularité du procédé de sélection d'un réseau d'accès sans fil, le message de refus d'attachement du terminal au premier réseau comprend un identifiant du deuxième réseau d'accès sans fil.

Ainsi, un refus d'attachement au premier réseau peut entrainer l'émission par le terminal d'une demande d'attachement au deuxième réseau, c'est-à-dire au réseau d'accès sans fil privé, même dans les cas où le terminal ne peut pas déduire de façon certaine l'identifiant de ce deuxième réseau. Cela peut être le cas par exemple dans une zone d'habitat où au moins un autre réseau d'accès sans fil est détecté par le terminal, en plus des premier et deuxième réseaux.

L'invention concerne également un équipement de communication offrant à un terminal un accès à un troisième réseau de communication par l'intermédiaire d'au moins un premier et un deuxième réseau d'accès sans fil, l'équipement de communication étant apte à sélectionner, parmi le premier et le deuxième réseau d'accès sans fil, un réseau d'accès sans fil par l'intermédiaire duquel le terminal accède au troisième réseau de communication, l'équipement de communication comprenant :
- des moyens de réception d'une demande d'attachement du terminal au premier réseau d'accès sans fil,
- des moyens de comparaison d'un identifiant du terminal avec une liste comprenant une pluralité d'identifiants de terminaux autorisés à se connecter au deuxième réseau d'accès sans fil,
- des moyens d'émission d'un message de refus d'attachement du terminal au premier réseau d'accès sans fil lorsque le terminal est autorisé à s'attacher au deuxième réseau d'accès sans fil.

Un tel équipement de communication est par exemple une passerelle domestique ou une passerelle d'entreprise.

Selon d'autres aspects, l'invention concerne également un programme d'ordinateur comprenant des instructions de code de programme pour la mise en oeuvre des étapes du procédé de sélection d'un réseau d'accès sans fil décrit précédemment, lorsque ces programmes sont exécutés par un ordinateur.

Ce programme d'ordinateur décrit ci-dessus peut utiliser n'importe quel langage de programmation, et être sous la forme de code source, code objet, ou de code intermédiaire entre code source et code objet, tel que dans une forme partiellement compilée, ou dans n'importe quelle autre forme souhaitable.

L'invention vise aussi un support d'enregistrement lisible par un ordinateur sur lequel est enregistré un programme d'ordinateur tel que décrit précédemment.

Le support d'informations peut être n'importe quelle entité ou dispositif capable de stocker le programme. Par exemple, le support peut comporter un moyen de stockage, tel qu'une ROM (pour *"Read Only Memory*"), par exemple un CD ROM ou une ROM de circuit microélectronique, ou encore un moyen d'enregistrement magnétique, par exemple une disquette (*floppy disc*) ou un disque dur.

D'autre part, le support d'informations peut être un support transmissible tel qu'un signal électrique ou optique, qui peut être acheminé via un câble électrique ou optique, par radio ou par d'autres moyens. Le programme selon l'invention peut être en particulier téléchargé sur un réseau de type Internet.

Alternativement, le support d'informations peut être un circuit intégré dans lequel le programme est incorporé, le circuit étant adapté pour exécuter ou pour être utilisé dans l'exécution du procédé en question.

D'autres caractéristiques et avantages apparaîtront à la lecture de modes de réalisation décrits en référence aux dessins dans lesquels :
- la figure 1 représente un système comprenant un premier et un deuxième réseau d'accès sans fil, un troisième réseau de communication ainsi qu'un équipement de communication réalisant une interface entre ces trois réseaux de communication,
- la figure 2 représente les différentes étapes d'un procédé de sélection d'un réseau d'accès sans fil mis en oeuvre par l'équipement de communication réalisant une interface entre trois réseaux de communication,
- la figure 3 représente un équipement de communication réalisant une interface entre trois réseaux de communication.

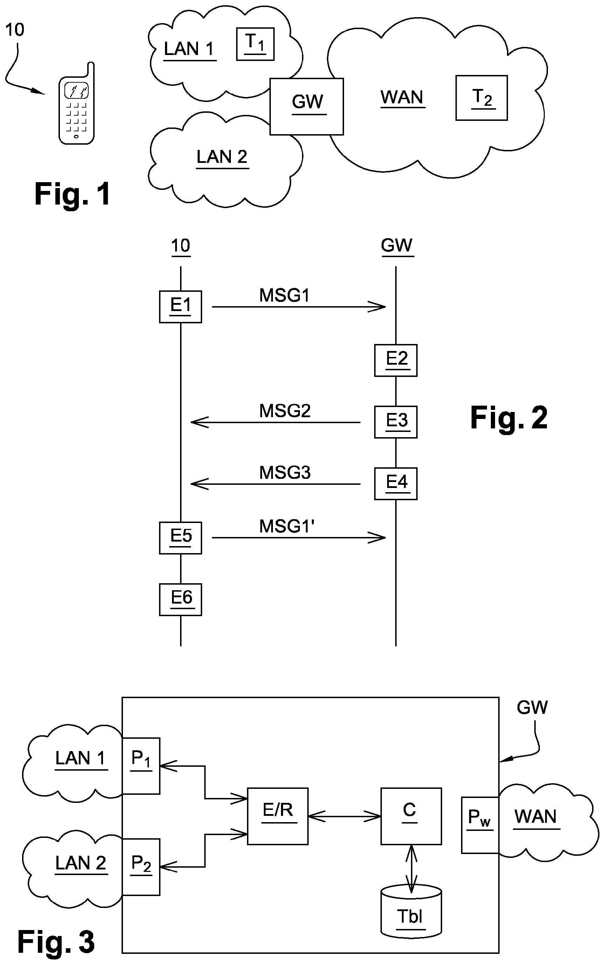

En référence à la **figure 1****,** un premier terminal T₁ appartient à un premier réseau de communication LAN1. Un équipement de communication GW est placé en extrémité du réseau LAN1 et assure l'interface entre le réseau LAN1 et un deuxième réseau de communication WAN. Un tel réseau de communication WAN comporte par exemple un équipement réseau T₂. L'équipement de communication GW assure également l'interface entre le réseau LAN1 et le réseau WAN et un troisième réseau de communication LAN2.

Le réseau LAN1 est par exemple un réseau local domestique ou un réseau local d'entreprise. L'équipement T₁ peut alors être un ordinateur de type PC, un décodeur vidéo de type Set Top Box, un téléphone IP, etc. Le réseau WAN est par exemple un réseau de type WAN géré par un opérateur en télécommunications. L'équipement T₂ peut alors être un serveur fournissant des services tels qu'une connexion Internet, de la télévision sur IP, de la vidéo sur IP, etc.

Le réseau LAN1 est plus particulièrement un réseau d'accès sans fil tel qu'un réseau d'accès WiFi ou WIMAX. Le réseau LAN2 est également particulièrement un réseau d'accès sans fil tel qu'un réseau d'accès WiFi ou WIMAX.

Le réseau LAN1 est un réseau à accès contrôlé, ou réseau d'accès sans fil privé. L'accès au réseau LAN1 est géré par le propriétaire de la passerelle GW qui autorise ou non un terminal à s'attacher au réseau LAN1. L'accès au réseau LAN1 est par exemple assujetti à la saisie d'un code d'accès propre au réseau LAN1 au niveau d'un terminal 10 souhaitant s'attacher au réseau LAN1. Un tel code d'accès peut se présenter sous la forme d'une clé WEP (*Wired Equivalent Privacy*)*.*

Le réseau LAN2 est un réseau à accès non contrôlé prévu pour un usage communautaire, ou réseau d'accès sans fil public. En utilisant la passerelle GW comme point d'accès à un réseau d'accès sans fil il est possible d'offrir un accès au réseau WAN le plus large possible.

L'accès au réseau LAN2 est autorisé à tout terminal se trouvant dans la zone de couverture du réseau LAN2.

Tous les réseaux d'accès sans fil prévus pour un usage public, tel que le réseau LAN2, desservis par une passerelle domestique ou une passerelle d'entreprise gérée par un même operateur en télécommunications ont le même identifiant réseau SSID IdResComm qui permet à un terminal de s'attacher à n'importe lequel de ces réseaux d'accès sans fil prévus pour un usage communautaire.

En référence à la **figure 2**, le terminal 10 se trouve de nouveau dans la zone de couverture des réseaux LAN1 et LAN2 desservis par la passerelle GW après s'être attaché à un réseau d'accès sans fil prévu pour un usage public desservi par une autre passerelle domestique.

Ainsi, le dernier identifiant de réseau mémorisé par le terminal 10 est l'identifiant IdResComm du réseau d'accès sans fil prévu pour un usage communautaire dernièrement visité.

Au cours d'une étape E1, le terminal 10 émet à destination de la passerelle GW une demande d'attachement MSG1 du terminal 10 au réseau LAN2 car le réseau LAN2 a le même identifiant réseau IdResComm que le dernier réseau d'accès sans fil auquel le terminal 10 s'est attaché. Une telle demande d'attachement est une demande d'attachement classique DHCP (Dynamic Host Configuration Protocol) telle que définie dans le document publié par l'IETF (groupe de standardisation de l'Internet, abréviation des termes anglais *Internet Engineering Task Force*) sous la référence RFC 1531 (RFC signifiant « requête pour commentaires », ou en anglais *Request For Comments).*

A réception de cette demande d'attachement MSG1, la passerelle GW compare, au cours d'une étape E2, un identifiant Id10 du terminal 10 à une pluralité d'identifiants correspondant aux différents terminaux autorisés à s'attacher au réseau LAN1 à accès contrôlé et mémorisés par la passerelle GW.

Un tel identifiant Id10 du terminal 10 est par exemple un numéro IMEI (*International Mobile Equipment Identity* ou en français identité internationale d'équipement mobile) permettant d'identifier de manière unique le terminal 10, ou encore une adresse MAC (pour *Medium Access Control*). Une adresse MAC est une adresse utilisée pour identifier un équipement de communication au niveau de la couche liaison de données telle que définie dans le modèle OSI (*Open Systems Interconnection*, ou interconnexion de systèmes ouverts en français) défini par l'ISO (Organisation Internationale de Normalisation). L'adresse MAC permet également d'identifier le terminal 10 de manière unique.

Si l'identifiant Id10 du terminal 10 n'est pas mémorisé par la passerelle GW, cela signifie que le terminal 10 ne s'est pas attaché précédemment au réseau LAN1. La passerelle émet alors, au cours d'une étape E3, à destination du terminal 10 un message d'acquittement MSG2 terminant ainsi la procédure d'attachement du terminal 10 au réseau LAN2. A réception du message d'acquittement MSG2, le terminal 10 est attaché au réseau LAN2 et peut ainsi accéder au réseau WAN par l'intermédiaire du réseau LAN2 et de la passerelle GW.

Si l'identifiant Id10 du terminal 10 est mémorisé par la passerelle GW, cela signifie que le terminal 10 est un terminal qui s'est précédemment attaché au réseau LAN1. La passerelle GW émet alors à destination du terminal 10, au cours d'une étape E4, un message de refus d'attachement MSG3 du terminal au réseau LAN2.

Ainsi le terminal 10 s'étant précédemment attaché au réseau LAN1 ne peut s'attacher par défaut au réseau LAN2. Ceci permet de garantir un niveau de qualité de service QoS optimal au terminal 10. En effet, le réseau LAN2 étant un réseau d'accès sans fil prévu pour un usage communautaire, le réseau LAN2 bénéficie d'un niveau de qualité de service QoS moindre que le réseau LAN1. En effet, s'agissant d'un réseau d'accès sans fil prévu pour un usage communautaire utilisant les ressources du réseau local du propriétaire de la passerelle GW le réseau LAN2 bénéficie d'une bande passante allouée minimale, et d'un niveau de priorité accordé aux données émises par le terminal moindre.

Dans un premier mode de réalisation de l'invention, à réception du message de refus d'attachement MSG3, le terminal 10 émet, au cours d'une étape E5, une demande d'attachement MSG1'au réseau LAN1 à destination de la passerelle GW, le terminal 10 ayant mémorisé un identifiant réseau IdResPriv du réseau LAN1 lors d'un attachement précédent au réseau LAN1.

Le terminal 10 s'attache alors au réseau LAN1 selon des procédés d'attachement classique.

Dans un deuxième mode de réalisation de l'invention, à réception du message de refus d'attachement MSG3, le terminal 10 recherche, au cours d'une étape E6, un réseau d'accès sans fil auquel s'attacher. Une fois un tel réseau d'accès sans fil identifié, le terminal 10 met en oeuvre une procédure d'attachement. Une telle procédure d'attachement du terminal 10 à un réseau d'accès sans fil peut être une procédure d'attachement classique ou bien peut être précédée de la mise en oeuvre du procédé de sélection d'un réseau d'accès sans fil tel que décrit en référence aux étapes E1 à E6.

Le procédé de sélection tel que décrit en référence à la figure 2 permet à un terminal s'étant déjà attaché une première fois à un réseau d'accès sans fil à accès contrôlé de s'attacher de nouveau à ce réseau d'accès sans fil à accès contrôlé lorsque le terminal à le choix de s'attacher à ce réseau d'accès sans fil à accès contrôlé ou à un autre réseau d'accès sans fil prévu pour un usage communautaire.

Le terminal bénéficie alors systématiquement du meilleur niveau de qualité de service QoS dès lors qu'il se trouve dans la zone de couverture du réseau sans fil à accès contrôlé.

De même, le procédé de sélection tel que décrit en référence à la figure 2 ne met pas en oeuvre un contrôle d'accès classique à un réseau d'accès sans fil. En effet, dans le procédé de sélection décrit précédemment, le contrôle d'accès au réseau sans fil prévu pour un usage communautaire se fait en fonction d'une autorisation d'un terminal à s'attacher ou pas à un réseau d'accès sans fil à accès contrôlé. Si un terminal est autorisé à s'attacher à un réseau d'accès sans fil à accès contrôlé, alors il n'est pas autorisé à s'attacher à un réseau d'accès sans fil prévu pour un usage communautaire.

La **figure 3** représente une passerelle apte à mettre en oeuvre les étapes du procédé de sélection décrit en référence à la figure 2.

Une telle passerelle GW comprend un premier port P₁ associé au réseau LAN1 et un deuxième port P₂ associé au réseau LAN2 par lesquels des données en provenance et à destination des réseaux LAN1 et LAN2 sont transmises.

De tels ports sont par exemple des points d'accès WiFi. La passerelle GW comprend également un port P_{W} associé au réseau WAN et par lequel des données en provenance et à destination du réseau WAN sont transmises. Dans un mode de réalisation particulier, la passerelle GW comprend un unique point d'accès WiFi. Un tel point d'accès comporte deux ports logiques associés respectivement au réseau LAN1 et au réseau LAN2.

Les ports P₁ et P₂ sont connectés en entrée de moyens d'émission/réception E/R aptes à émettre les messages d'acquittement MSG2 et les messages de refus d'attachement MSG3 à destination du terminal 10 et aptes à recevoir les demandes d'attachement MSG1 et les demandes d'attachement MSG1' émises par le terminal 10. Dans un mode de réalisation de la passerelle GW, la passerelle GW comprend autant de moyens d'émission/réception E/R qu'elle comporte de points d'accès WiFi.

Les moyens d'émission/réception E/R sont connectés en entrée de moyens de comparaison C de l'identifiant du terminal 10 avec une pluralité d'identifiants correspondant aux différents terminaux autorisés à s'attacher au réseau LAN1 mémorisés dans une base de données Tbl connectée aux moyens de comparaison C.

## Revendications

1. Procédé de sélection d'un réseau d'accès sans fil par l'intermédiaire duquel un terminal accède à un troisième réseau de communication, (WAN) le procédé de sélection étant **caractérisé par** les étapes suivantes mises en oeuvre par un équipement de communication offrant un accès au troisième réseau de communication par l'intermédiaire d'au moins un premier et un deuxième réseau d'accès sans fil, le deuxième réseau offrant un niveau de qualité de service supérieur au premier réseau :
- réception d'une demande d'attachement du terminal au premier réseau d'accès sans fil (E1),
- comparaison d'un identifiant du terminal avec une pluralité d'identifiants de terminaux autorisés à se connecter au deuxième réseau d'accès sans fil (E2),
- émission d'un message de refus d'attachement du terminal au premier réseau d'accès sans fil lorsque le terminal est autorisé à s'attacher au deuxième réseau d'accès sans fil (E4).

2. Procédé de sélection d'un réseau d'accès sans fil selon la revendication 1 comprenant une étape d'émission d'un message d'acquittement d'attachement du terminal au premier réseau d'accès sans fil lorsque le terminal est autorisé à s'attacher au premier réseau d'accès sans fil (E3).

3. Procédé de sélection d'un réseau d'accès sans fil selon la revendication 1 comprenant une étape de réception d'une demande d'attachement du terminal au deuxième réseau d'accès sans fil (E5).

4. Procédé de sélection d'un réseau d'accès sans fil selon la revendication 1 **caractérisé en ce que** le message de refus d'attachement du terminal au premier réseau comprend un identifiant du deuxième réseau d'accès sans fil.

5. Equipement de communication offrant à un terminal un accès à un troisième réseau de communication par l'intermédiaire d'au moins un premier et un deuxième réseau d'accès sans fil, le deuxième réseau offrant un niveau de qualité de service supérieur au premier réseau, l'équipement de communication étant apte à sélectionner, parmi le premier et le deuxième réseau d'accès sans fil, un réseau d'accès sans fil par l'intermédiaire duquel le terminal accède au troisième réseau de communication, l'équipement de communication étant **caractérisé en ce qu'**il comprend:
- des moyens de réception (E/R) d'une demande d'attachement du terminal au premier réseau d'accès sans fil,
- des moyens de comparaison (C) d'un identifiant du terminal avec une liste comprenant une pluralité d'identifiants de terminaux autorisés à se connecter au deuxième réseau d'accès sans fil,
- des moyens d'émission (E/R) d'un message de refus d'attachement du terminal au premier réseau d'accès sans fil lorsque le terminal est autorisé à s'attacher au deuxième réseau d'accès sans fil.

6. Programme d'ordinateur comprenant des instructions de code de programme pour la mise en oeuvre des étapes du procédé de sélection d'un réseau d'accès sans fil selon la revendication 1 lorsque le programme est exécuté par un processeur.

7. Support d'enregistrement lisible par un équipement commutateur sur lequel est enregistré le programme selon la revendication 6.

## Patentansprüche

1. Verfahren zur Auswahl eines drahtlosen Zugangsnetzes, über welches ein Endgerät auf ein drittes Kommunikationsnetz (WAN) zugreift, wobei das Auswahlverfahren durch die folgenden Schritte gekennzeichnet ist, die von einer Kommunikationseinrichtung durchgeführt werden, die einen Zugang zu dem dritten Kommunikationsnetz über wenigstens ein erstes und ein zweites drahtloses Zugangsnetz bietet, wobei das zweite Netz ein höheres Dienstgüteniveau als das erste Netz bietet:
- Empfang einer Anforderung zum Anschließen des Endgerätes an das erste drahtlose Zugangsnetz (E1),
- Vergleich einer Kennung des Endgerätes mit einer Vielzahl von Kennungen von Endgeräten, die autorisiert sind, sich mit dem zweiten drahtlosen Zugangsnetz zu verbinden (E2),
- Senden einer Nachricht der Zurückweisung des Anschließens des Endgerätes an das erste drahtlose Zugangsnetz, wenn das Endgerät autorisiert ist, sich an das zweite drahtlose Zugangsnetz anzuschließen (E4).

2. Verfahren zur Auswahl eines drahtlosen Zugangsnetzes nach Anspruch 1, welches einen Schritt des Sendens einer Nachricht zur Bestätigung des Anschließens des Endgerätes an das erste drahtlose Zugangsnetz, wenn das Endgerät autorisiert ist, sich an das erste drahtlose Zugangsnetz anzuschließen (E3), umfasst.

3. Verfahren zur Auswahl eines drahtlosen Zugangsnetzes nach Anspruch 1, welches einen Schritt des Empfangs einer Anforderung zum Anschließen des Endgerätes an das zweite drahtlose Zugangsnetz (E5) umfasst.

4. Verfahren zur Auswahl eines drahtlosen Zugangsnetzes nach Anspruch 1, **dadurch gekennzeichnet, dass** die Nachricht der Zurückweisung des Anschließens des Endgerätes an das erste Netz eine Kennung des zweiten drahtlosen Zugangsnetzes umfasst.

5. Kommunikationseinrichtung, welche einem Endgerät einen Zugang zu einem dritten Kommunikationsnetz über wenigstens ein erstes und ein zweites drahtloses Zugangsnetz bietet, wobei das zweite Netz ein höheres Dienstgüteniveau als das erste Netz bietet, wobei die Kommunikationseinrichtung in der Lage ist, aus dem ersten und dem zweiten drahtlosen Zugangsnetz ein drahtloses Zugangsnetz auszuwählen, über welches das Endgerät auf das dritte Kommunikationsnetz zugreift, wobei die Kommunikationseinrichtung **dadurch gekennzeichnet ist, dass** sie umfasst:
- Mittel zum Empfang (E/R) einer Anforderung zum Anschließen des Endgerätes an das erste drahtlose Zugangsnetz,
- Mittel zum Vergleich (C) einer Kennung des Endgerätes mit einer Liste, welche eine Vielzahl von Kennungen von Endgeräten umfasst, die autorisiert sind, sich mit dem zweiten drahtlosen Zugangsnetz zu verbinden,
- Mittel zum Senden (E/R) einer Nachricht der Zurückweisung des Anschließens des Endgerätes an das erste drahtlose Zugangsnetz, wenn das Endgerät autorisiert ist, sich an das zweite drahtlose Zugangsnetz anzuschließen.

6. Computerprogramm, welches Programmcodeanweisungen zur Durchführung der Schritte des Verfahrens zur Auswahl eines drahtlosen Zugangsnetzes nach Anspruch 1, wenn das Programm von einem Prozessor ausgeführt wird, umfasst.

7. Von einer Vermittlungseinrichtung lesbares Aufzeichnungsmedium, auf welchem das Programm nach Anspruch 6 aufgezeichnet ist.

## Claims

1. Method for selecting a wireless access network by way of which a terminal accesses a third communication network (WAN), the selection method being **characterized by** the following steps, implemented by a communication device providing access to the third communication network by way of at least one first and one second wireless access network, the second network providing a higher quality of service level than the first network:
- receiving a request to associate the terminal with the first wireless access network (E1),
- comparing an identifier of the terminal with a plurality of identifiers of terminals authorized to connect to the second wireless access network (E2),
- sending a message rejecting the association of the terminal with the first wireless access network when the terminal is authorized to associate with the second wireless access network (E4).

2. Method for selecting a wireless access network according to Claim 1, comprising a step of sending a message acknowledging the association of the terminal with the first wireless access network when the terminal is authorized to associate with the first wireless access network (E3).

3. Method for selecting a wireless access network according to Claim 1, comprising a step of receiving a request to associate the terminal with the second wireless access network (E5).

4. Method for selecting a wireless access network according to Claim 1, **characterized in that** the message rejecting the association of the terminal with the first network comprises an identifier of the second wireless access network.

5. Communication device providing a terminal with access to a third communication network by way of at least one first and one second wireless access network, the second network providing a higher quality of service level than the first network, the communication device being able to select, from the first and the second wireless access network, a wireless access network by way of which the terminal accesses the third communication network, the communication device being **characterized in that** it comprises:
- means (E/R) for receiving a request to associate the terminal with the first wireless access network,
- means (C) for comparing an identifier of the terminal with a list comprising a plurality of identifiers of terminals authorized to connect to the second wireless access network,
- means (E/R) for sending a message rejecting the association of the terminal with the first wireless access network when the terminal is authorized to associate with the second wireless access network.

6. Computer program comprising program code instructions for implementing the steps of the method for selecting a wireless access network according to Claim 1 when the program is executed by a processor.

7. Recording medium able to be read by a switching device and on which the program according to Claim 6 is recorded.
